# EUROPÄISCHE PATENTANMELDUNG

(11) **EP 4 497 696 A1**
(43) Veröffentlichungstag der Anmeldung: **29.01.2025**
(21) Anmeldenummer: 24184100.6
(22) Anmeldetag: 24.06.2024
(51) Int. Cl.: B65D 1/40, B65D 25/20, B65D 1/22, B65D 1/42, B65D 21/02, B65G 1/02, B65G 1/04, B25J 5/00, B25J 15/00

(54) **BEHÄLTER MIT EINEM RÜCKSPRUNG AN EINER SEITENWAND ZUM EINBRINGEN EINES RÜCKHOLARMS EINER RÜCKHOLVORRICHTUNG ZUM ZIEHEN DES BEHÄLTERS**

(30) Priorität: 23.06.2023 DE 102023116647
(71) Anmelder: BITO-Lagertechnik Bittmann GmbH, 55590 Meisenheim (DE)
(72) Erfinder: BECKMANN, Stefan, 55590 Meisenheim (DE); PORCHER, Moritz Laurin, 67757 Kreimbach-Kaulbach (DE)
(74) Vertreter: Richardt Patentanwälte PartG mbB

(57) **Zusammenfassung**

Die Erfindung betrifft einen Behälter (1) zum Lagern und Transportieren von Gegenständen, wobei der Behälter einen Boden (2), der einen Laderaum (3) des Behälters nach unten hin begrenzt, und von dem Boden aus sich nach oben erstreckende Seitenwände (4-7) aufweist, wobei zumindest eine Seitenwand (4) einen senkrecht zum Boden verlaufenden Kontaktbereich (8) zum Positionieren des Behälters hinter einem weiteren Behälter und einen Rücksprung (9) gegenüber dem Kontaktbereich an zumindest einer Seite der Seitenwand aufweist, wobei sich der Rücksprung zumindest horizontal von einer Außenkante (10) der Seitenwand durchgängig bis zum Kontaktbereich erstreckt.

## Beschreibung

Die Erfindung betrifft einen Behälter zum Lagern und Transportieren von Gegenständen.

Es ist bekannt, Behälter zum Lagern und Transportieren von Gegenständen, beispielsweise von Werkzeugen oder Zwischenprodukten einer Fertigung oder zu versendenden Waren, in einem Lager systematisch zu lagern. Hierbei können die Behälter auch hintereinander in einer Reihe gelagert werden, die beispielsweise von einem Haupttransportweg seitlich angeordnet ist.

Der Erfindung liegt die Aufgabe zugrunde, einen verbesserten Behälter zum Lagern und Transportieren von Gegenständen bereitzustellen. Die der Erfindung zugrunde liegende Aufgabe wird durch die Merkmale des unabhängigen Patentanspruchs gelöst. Bevorzugte Ausführungsformen der Erfindung sind in den abhängigen Patentansprüchen angegeben.

Es wird ein Behälter zum Lagern und Transportieren von Gegenständen vorgeschlagen. Der Behälter weist einen Boden, der einen Laderaum des Behälters nach unten hin begrenzt, und von dem Boden aus sich nach oben erstreckende Seitenwände auf. Zumindest eine Seitenwand der Seitenwände weist einen senkrecht zum Boden verlaufenden Kontaktbereich zum Positionieren des Behälters hinter einem weiteren Behälter und einen Rücksprung gegenüber dem Kontaktbereich auf. Der Rücksprung erstreckt sich zumindest horizontal von einer Außenkante der Seitenwand durchgängig bis zum Kontaktbereich.

Der Kontaktbereich ist bevorzugt durch eine Ebene charakterisiert, die sich senkrecht zum Boden erstreckt und innerhalb welcher die Seitenwand auf einen weiteren Kontaktbereich des weiteren Behälters stoßen kann. Diese Ebene wird im Folgenden Kontaktebene genannt. Die Kontaktebene kann als eine äußere Begrenzung des Behälters in einer Richtung, die senkrecht von einer Außenseite der Seitenwand weg verläuft, verstanden werden. Diese Richtung wird im Folgenden Seitenwandnormalenrichtung genannt. Mit anderen Worten ist die Seitenwand derart ausgebildet, dass die Seitenwand als erstes mit dem Kontaktbereich den weiteren Behälter berührt, wenn der Behälter auf den weiteren Behälter trifft, insbesondere, wenn der Behälter auf den weiteren Behälter geschoben wird.

Der Kontaktbereich kann gemäß einer Ausgestaltung eine zusammenhängende Kontaktfläche aufweisen, die senkrecht zum Boden verläuft. Diese Ausgestaltung ermöglicht es eine Berührungsfläche zwischen der Seitenwand und dem weiteren Behälter zu maximieren. Dadurch kann ein Druck, der zwischen dem Kontaktbereich und dem weiteren Behälter bei einem Aufschieben des Behälters auf den weiteren Behälter herrscht, verteilt werden, was insbesondere lokale Kraftspitzen verhindert und die Langlebigkeit eines solchen Behälters gewährleisten kann.

Alternativ oder zusätzlich kann der Kontaktbereich mehrere in der Seitenwandnormalenrichtung abstehende Rippen aufweisen. Bei dieser Variante liegen Stirnkanten der Rippen in der Kontaktebene. Vorteilhafterweise kreuzen sich die Rippen, um zu verhindern, dass sich Rippen der Kontaktfläche mit weiteren Rippen eines weiteren Kontaktbereiches des weiteren Behälters ineinander schieben können. Hierbei kann die Kontaktebene insbesondere durch diejenigen Punkte spezifiziert werden, an denen sich die äußeren Kanten der Rippen kreuzen.

Der Rücksprung zeichnet sich insbesondere dadurch aus dass ein Raum der Seitenwand, zwischen der Außenkante der Seitenwand und dem Kontaktbereich ausgespart ist, der im Folgenden als ausgesparter Raum bezeichnet wird. Es sei angemerkt dass die Seitenwand im Bereich des Rücksprungs vorzugsweise nach wie vor vollständig als solche vorhanden ist, sodass keine im Behälter befindlichen Gegenstände herausfallen können.

In den meisten Anwendungsfällen ist der ausgesparte Raum und damit der Rücksprung als ein Bereich der Seitenwand erkennbar, in welchem im Vergleich zu einem davon insbesondere unmittelbar benachbarten Bereich der Seitenwand Material der Seitenwand ausgespart ist. Insbesondere ist der ausgesparte Raum und damit der Rücksprung als ein Bereich der Seitenwand erkennbar, in welchem Strukturelemente der Seitenwand in Richtung der Seitenwandnormalenrichtung im Vergleich zu entsprechenden Strukturelementen im benachbarten Bereich gekürzt sind oder sogar vollständig fehlen. So können beispielsweise die besagten in der Seitenwandnormalenrichtung abstehenden Rippen in dem Bereich des Rücksprunges in der Seitenwandnormalenrichtung gekürzt sein bzw. fehlen, um den ausgesparten Raum zu bilden. Das ausgesparte Material der Seitenwand entspricht in diesem Fall einem gekürzten Material der abstehenden bzw. fehlenden Rippen.

Der Rücksprung des vorgeschlagenen Behälters ermöglicht nun z.B. ein Ziehelement, insbesondere einen Finger, insbesondere einen Ziehfinger einer Rückholvorrichtung, in den ausgesparten Raum einzubringen. Dies ermöglicht es, den Behälter mithilfe des Ziehfingers von dem weiteren Behälter wegzuziehen, wenn der Behälter unmittelbar neben bzw. hinter dem weiteren Behälter ohne einen Zwischenraum gelagert ist, bei denen sich also die jeweiligen Kontaktbereiche berühren. Ohne den Rücksprung würde das Ziehelement an eine Seitenwand des weiteren Behälters prallen und könnte dadurch den Behälter nicht an der Seitenwand des Behälters mithilfe des Ziehelements ziehen. Um in einem solchen Fall den Behälter mithilfe des Ziehelements zu ziehen, müsste der Behälter in einem Abstand von dem weiteren Behälter positioniert werden. Mithilfe des Rücksprunges der Seitenwand kann nun der Behälter unmittelbar an dem weiteren Behälter gelagert werden und trotzdem eine Möglichkeit bereitgestellt werden, den Behälter von dem weiteren Behälter wegzuziehen. Dadurch kann ein erforderlicher Lagerplatz in einem Lager zum Lagern des Behälters eingespart werden.

Nach einer möglichen Variante ist der Rücksprung flächig ausgebildet. Hierbei können die "zurückgesprungenen" Teile der Seitenwand, die sich in horizontaler Richtung neben dem Kontaktbereich befinden, zusammen eine insbesondere ebene Oberfläche bereitstellen, die jedoch ihrerseits wieder z.B. Rippen aufweisen kann. Im Fall von Rippen würden dann die äußeren Kanten der Rippen Teil der besagten Oberfläche sein oder diese bilden. Ein Bereich der Seitenwand, der sich zwischen der oben genannten Außenkante der Seitenwand und dem Kontaktbereich befindet und den Rücksprung aufweist, wird im Folgenden Rücksprungbereich genannt.

Eine flächige Ausgestaltung des Rücksprunges ist insofern von Vorteil, als dass der Finger, insbesondere das Ziehelement, in einer beliebigen Position innerhalb des Rücksprungbereiches anhalten kann und das Ziehelement in der angehaltenen Position den Behälter ziehen kann, ohne dass das Ziehelement aufgrund einer etwaigen Schräge der Oberfläche nach oben oder unten verrutscht.

Gemäß einer Ausgestaltung erstreckt sich der Kontaktbereich bezogen auf die Höhe des Behälters zumindest im unteren Drittel, bevorzugt zumindest im unteren Viertel und besonders bevorzugt zumindest im unteren Fünftel des Behälters. Diese Ausgestaltung kann verhindern, dass sich der Behälter im Gesamten nach oben verschiebt, wenn der Behälter auf den weiteren Behälter gedrückt wird. Mit anderen Worten kann bei dieser Ausgestaltung eine Gefahr eines Aufbäumens des Behälters reduziert werden.

Eine Weiterbildung dieser Ausgestaltung sieht vor, dass sich der Kontaktbereich nach unten hin mit einem Abstand von etwa einem Zentimeter bis zum Boden erstreckt. Bei dieser Weiterbildung kann die Gefahr des Aufbäumes noch weiter reduziert werden. Je weiter sich der Kontaktbereich bis zum Boden erstreckt, desto besser kann das Aufbäumen verhindert werden. Der Abstand zum Boden kann vermeiden, dass Schmutzpartikel, die sich beim Schieben des Behälters an einer Außenkante des Bodens ansammeln könnten, ein dichtes Aneinanderschieben der Behälter verhindern.

In den meisten Anwendungsfällen entspricht eine vertikale Höhe des Rücksprungs zumindest einem Drittel, vorzugsweise zumindest einer Hälfte, einer horizontalen Breite des Rücksprungs. Das könnte ermöglichen, dass das besagte Ziehelement z.B. in einer Schwenkbewegung in den Rücksprung einschwenkt werden kann. Dies kann eine besonders einfache Konstruktion des Ziehelements ermöglichen.

Vorteilhafterweise beträgt die horizontale Erstreckung des Rücksprungs von der Außenkante der Seitenwand bis zum Kontaktbereich höchstens 2cm, bevorzugt höchstens 3cm, besonders bevorzugt höchstens 5cm. Weist die horizontale Erstreckung des Rücksprungs derartige Maße auf, so kann zum einen ein möglichst großer Kontaktbereich vorgesehen werden und zum anderen ein negativer Einfluss des Rücksprunges auf eine Stabilität der Seitenwand reduziert werden.

Vorteilhafterweise beträgt die horizontale Erstreckung des Rücksprungs von der Außenkante der Seitenwand bis zum Kontaktbereich mindestens 2cm, bevorzugt mindestens 3cm, besonders bevorzugt mindestens 5cm. Weist die horizontale Erstreckung des Rücksprungs derartige Maße auf, so kann sichergestellt werden, dass das Ziehelement sicher in den ausgesparten Raum eingebracht werden kann, auch wenn der Behälter in einer Richtung senkrecht zu der Seitenwandnormalenrichtung verrutscht ist.

Vorteilhafterweise ist der Rücksprung in einem unteren Bereich, insbesondere an einer unteren Ecke der Seitenwand vorgesehen. Der untere Bereich kann die untere Hälfte oder vorzugsweise das untere Drittel oder gar das untere Viertel der Gesamthöhe des Behälters sein. Dies könnte eine Gefahr eines Ankippens des Behälters bei einem Ziehen des Behälters mit dem Ziehelement reduzieren. Dadurch könnte insbesondere eine Reibung zwischen einer Lauffläche des Behälters und einem Untergrund, auf welchem die Lauffläche aufliegt, reduziert werden. Die Lauffläche befindet sich auf einer Unterseite des Behälters. Prinzipiell könnte die Lauffläche sich über die gesamte Unterseite erstrecken. Jedoch bildet in vielen Fällen die Lauffläche nur einen Teil der Unterseite aus. Beispielsweise kann die Lauffläche in Form von sich kreuzenden Rippen der Unterseite ausgebildet sein, die im Vergleich zu einem übrigen Teil der Unterseite nach unten abstehen. Dadurch kann eine Reibfläche, auf der eine Reibung zwischen der Lauffläche und dem Untergrund wirkt, reduziert werden.

Gemäß einer weiteren Ausgestaltung ist in dem Bereich des Rücksprunges die Seitenwand wasserundurchlässig. Bei dieser Ausgestaltung weist die Seitenwand neben dem Rücksprung bevorzugt an anderer Stelle auf Bodenhöhe zumindest einen Wasserablaufkanal auf. Diese Ausgestaltung kann insbesondere eine Stabilität der Seitenwand in dem Rücksprungbereich erhöhen, ohne dass auf die Möglichkeit verzichtet werden muss, dass in den Behälter eindringendes Wasser ablaufen kann. Hierbei können an Stellen möglicher Wasserablaufkanäle zusätzliche Versteifungselemente vorgesehen sein.

In einer vorteilhaften Ausgestaltung ist vorgesehen, dass der Rücksprung in einer Ebene, die parallel zu der Seitenwand verläuft, einen Querschnitt in Form eines Kreissektors aufweist. Dies erlaubt zum einen, dass das Ziehelement in den Rücksprungbereich eingeschwenkt werden kann, und zum anderen, dass der Kontaktbereich möglichst maximiert ist.

Gemäß einer weiteren Ausführungsform ist vorgesehen, dass an der Seitenwand eine Führungskante zum Führen des Behälters auf einer Transportebene eines Transportsystems zum Transportieren des Behälters angeordnet ist. Bevorzugt ist bei dieser Ausführungsform der Kontaktbereich zumindest teilweise durch die Führungskante gebildet. Mithilfe der Führungskante kann der Behälter an einer Seitenführung oder Seitenbegrenzung, beispielsweise an einer Metallschiene, eines Transportsystems, z.B. einer Rollenbahn oder eines Förderbandes, entlang gleiten. Hierbei kann insbesondere eine Gefahr eines Verkantens des Behälters an der Seitenführung reduziert werden. Zusätzlich stabilisiert die Führungskante die Seitenwand in einem Bereich, der häufig an die Seitenführung des Transportsystems stößt.

In einer vorteilhaften Weiterbildung weisen mehrere der Seitenwände, insbesondere alle Seitenwände, einen jeweiligen Kontaktbereich und einen jeweiligen Rücksprung auf. Dies ermöglicht es, den Ziehfinger an mehreren Seitenwänden in den jeweiligen Rücksprung einzubringen, um den Behälter an der jeweiligen Seitenwand, in deren Rücksprung das Ziehelement eingebracht ist, zu ziehen. Dies ist insofern praktisch, als dass der Behälter in mehrere Richtungen gezogen werden kann. Das Ziehelement kann hierfür an einer ausgewählten Seitenwand der Seitenwände in den Rücksprung der jeweiligen Seitenwand eingeschoben werden. Im Anschluss daran wird auf den Ziehfinger eine Zugkraft aufgebracht, die über den Ziehfinger auf den Rücksprungbereich übertragen wird.

Des Weiteren wird ein Lagersystem mit einem Behälter und einer Rückholvorrichtung zum Ziehen des Behälters vorgeschlagen. Die Rückholvorrichtung kann gemäß einer Variante in Form eines Regalshuttles ausgebildet sein. Der Behälter kann nach einer der oben beschriebenen Ausgestaltungen ausgeführt sein. Die Rückholvorrichtung, insbesondere das Regalshuttle, weist einen Rumpf und ein Ziehelement, insbesondere einen Ziehfinger, auf. Das Ziehelement ist beweglich zu dem Rumpf. Der Rumpf ist bevorzugt derart zu dem Behälter positionierbar, dass das Ziehelement zum Ziehen des Behälters mithilfe des Ziehelements von der Seite in den Rücksprung des Behälters einbringbar ist. "Von der Seite" meint in diesem Fall z.B., dass das Ziehelement in den Rücksprung einfährt oder einschwenkt. Vorteilhafterweise weist das Ziehelement zumindest einen, bevorzugt zwei Freiheitsgrade der Bewegung in Bezug zu dem Rumpf auf. So kann das Ziehelement beispielsweise ausfahrbar gegenüber dem Rumpf in einer Richtung, die parallel zum Boden und senkrecht zur Ziehrichtung der Rückholvorrichtung verläuft, sein. Die Richtung kann allgemein in einer Ebene verlaufen parallel zur den Rücksprung aufweisenden Seitenwand.

In einer Weiterbildung umfasst die Beweglichkeit des Ziehelements eine Schwenkbewegung. Hierbei ist das Ziehelement zur Durchführung der Schwenkbewegung bevorzugt schwenkbar um eine Drehachse gelagert, wobei sich die Drehachse senkrecht zu der den Rücksprung aufweisenden Seitenwand erstreckt. Dies kann beispielsweise dadurch realisiert sein, dass das Ziehelement auf einem drehbaren Rohr montiert ist, das drehbar um die Drehachse gelagert ist.

Praktischerweise weist die Rückholvorrichtung ein Fahrwerk auf, wobei die Rückholvorrichtung mithilfe des Fahrwerks innerhalb eines Lagers beweglich ist. Insbesondere kann der Behälter mithilfe des Ziehelements auf eine Transportfläche des Regalshuttles gezogen werden und im Anschluss daran unter Verwendung des Fahrwerks zu unterschiedlichen Orten innerhalb des Lagers transportiert werden. Das Regalshuttle weist bevorzugt einen Antriebsmotor zum Antreiben des Fahrwerks auf. Denkbar ist auch eine Variante, bei welcher das Regalshuttle mithilfe von ortsfesten Antriebsrollen des Lagers antreibbar ist.

Es sei angemerkt, dass im Rahmen der vorliegenden Offenbarung exemplarisch von einem Ziehelement in Form eines Ziehfingers die Rede ist, ohne dass dies jedoch auf die konkrete Form eines Fingers als solchen beschränkend zu verstehen ist. Allgemein wird darunter ein Ziehelement verstanden, welches in der Lage ist, die Funktion des Ziehens des Behälters in einer Richtung senkrecht zur den Rücksprung aufweisenden Seitenwand zu ermöglichen.

In einer weiteren Ausgestaltung ist vorgesehen, dass der Rücksprung durch den besagten ausgesparten Raum gebildet ist und der ausgesparte Raum nach unten hin offen ist. Der nach unten hin offene ausgesparte Raum könnte insbesondere ein Einbringen des Ziehelementes, insbesondere ein Einschwenken des Ziehelementes, in den Rücksprung erleichtern. Prinzipiell ermöglicht der nach unten offene Rücksprung ein Einschwenken des Ziehelementes von unten nach oben. Denkbar ist zum Beispiel, dass das Ziehelement unter dem Behälter bis zu der Seitenwand, an welcher sich der Rücksprung befindet, fahrbar ist und dann nach oben in den Rücksprung schwenkbar ist. Dies könnte zusätzlichen Platz in der Fläche des Lagersystems schaffen, da das Ziehelement nicht seitlich neben dem Behälter entlanggeführt werden muss, sondern unterhalb des Behälters bewegt werden könnte.

Darüber hinaus könnte durch den nach unten offenen ausgesparten Raum das Ziehelement der Rückholvorrichtung zum Zurückziehen des Behälters an einer untersten Stelle des Behälters positioniert werden. Je höher das Ziehelement an der Seitenwand anliegt, desto höher kann ein durch eine Zugkraft des Ziehelementes erzeugtes Drehmoment, das auf den Behälter wirkt, sein. Das Drehmoment ergibt sich aus einer Multiplikation der Zugkraft des Ziehelementes mit einem Hebelarm, der sich von dem Boden des Behälters bis zu einem Angriffspunkt des Ziehelementes an der Seitenwand bemisst. Je höher dieses Drehmoment ist, desto stärker wird der Behälter beim Zurückziehen mit dem Ziehelement nach unten gedrückt und desto stärker ist eine Reibungskraft zwischen der Lauffläche und dem Untergrund, auf welchem die Lauffläche aufliegt. Demzufolge könnte der nach unten offene ausgesparte Raum eine Länge des Hebelarms der Zugkraft reduzieren und damit die Reibungskraft zwischen der Lauffläche und dem Untergrund beim Zurückziehen des Behälters auf der Unterlage verringern.

Gemäß einer weiteren Ausgestaltung weist der ausgesparte Raum an der Außenkante der Seitenwand eine Höhe, die in vertikaler Richtung von einer Lauffläche des Behälters aus messbar ist, von mindestens 5 cm auf. Es hat sich durch Experimente gezeigt, dass das Ziehelement, sofern dieses schwenkbar in den Rücksprung einbringbar ist, eine minimale Länge von etwa 4 cm aufweisen sollte, um zur Bereitstellung der besagten Zugkraft ausreichend groß dimensioniert zu sein. Um eine mögliche Toleranz eines vertikalen Abstandes zwischen der Drehachse des Ziehelementes und dem Untergrund, insbesondere der Rollenbahn, zu kompensieren, kann bei einer Auslegung der Höhe des ausgesparten Raumes zusätzlich zu der minimalen Länge des Ziehelementes auch ein Toleranzabstand von etwa 1 cm mit einfließen. Aus einer Summe der minimalen Länge des Ziehelementes und des Toleranzabstandes. Es versteht sich von selbst, dass das Ziehelement in vertikaler Richtung auch einen Abstand zu dem Untergrund, insbesondere der Rollenbahn, haben kann. Dieser Abstand kann, insbesondere auch für den Fall, dass der ausgesparte Raum nach unten hin offen ist, durch den Toleranzabstand ebenfalls berücksichtigt werden. Für den Fall, dass der ausgesparte Raum nach unten hin offen ist, erstreckt sich der ausgesparte Raum von der Lauffläche aus gesehen in vertikaler Richtung zumindest 5 cm.

Für besonders stark beladene Behälter hat sich gezeigt, dass die minimale Länge des Ziehelementes bis zu etwa 10 cm betragen sollte. Der Toleranzabstand kann in diesem Fall bis zu 2 cm betragen. Daraus ergibt sich, dass die Höhe des ausgesparten Raumes bis zu 12 cm betragen kann. Ein erster Bereich der Höhe des ausgesparten Raumes, der möglichst viele Anwendungsfälle des Behälters abdeckt, kann durch einen ersten unteren Grenzwert des ersten Bereiches von etwa 5 cm und einen ersten oberen Grenzwert des ersten Bereiches von etwa 12 cm spezifiziert sein. Da eine starke Beladung des Behälters vergleichsweise selten vorliegt, ist der obere Grenzwert des Bereiches der Höhe für eine große Menge, beispielsweise eintausend Behälter, in vielen Fällen nicht wirtschaftlich. Schließlich kann ein nutzbares Volumen des Laderaums durch einen zu hohen ausgesparten Raum reduziert sein. Aus diesem Grund kann ein zweiter Bereich der Höhe des ausgesparten Raumes, der möglichst viele Anwendungsfälle des Behälters abdeckt und dabei trotzdem das nutzbare Volumen des Laderaumes möglichst maximiert, durch einen zweiten unteren Grenzwert des zweiten Bereiches von etwa 5 cm und einen zweiten oberen Grenzwert des zweiten Bereiches von etwa 8 cm spezifiziert sein.

Für eine Tiefe des ausgesparten Raumes, die an einer Unterkante der Seitenwand messbar ist, ergeben sich ähnliche Überlegungen. Für den Fall, dass das Ziehelement in den Rücksprung schwenkbar ist, kann die Tiefe mindestens 5 cm betragen. Ein erster Bereich der Tiefe des ausgesparten Raumes, der möglichst viele Anwendungsfälle des Behälters abdeckt, kann durch einen ersten unteren Grenzwert des ersten Bereiches der Tiefe von etwa 5 cm und einen ersten oberen Grenzwert des ersten Bereiches der Tiefe von etwa 12 cm spezifiziert sein. Ein zweiter Bereich der Tiefe des ausgesparten Raumes, der möglichst viele Anwendungsfälle des Behälters abdeckt und dabei trotzdem das nutzbare Volumen des Laderaumes möglichst maximiert, kann durch einen zweiten unteren Grenzwert des zweiten Bereiches der Tiefe von etwa 5 cm und einen zweiten oberen Grenzwert des zweiten Bereiches der Tiefe von etwa 8 cm spezifiziert sein.

Eine Breite des ausgesparten Raumes, die parallel zu der Seitenwandnormalenrichtung messbar ist, ist insbesondere an eine Breite des Ziehelementes und ein Spiel entlang der Seitenwandnormalenrichtung beim Positionieren der Rückholvorrichtung an dem Rücksprung angepasst. Das Spiel kann beispielsweise bis zu 0,5 cm betragen. Die Breite des Ziehelementes kann beispielsweise in einem Bereich von etwa 0,3 bis 2 cm liegen. So kann praktischerweise ein Bereich der Breite des ausgesparten Raumes durch einen unteren Grenzwert von etwa 0,8 cm und einen oberen Grenzwert von etwa 2,5 cm spezifiziert sein.

Für den Fall, dass die Rückholvorrichtung derart ausgebildet ist, dass das Ziehelement in den Rücksprung einschiebbar ist, kann die Höhe des ausgesparten Raumes geringer dimensioniert werden. So kann gemäß einer möglichen Ausgestaltung der ausgesparte Raum an der Außenkante der Seitenwand eine Höhe, die in vertikaler Richtung von einer Lauffläche des Behälters aus messbar ist, von mindestens 2,5 cm aufweisen. Das Ziehelement ist bei dieser Ausgestaltung insbesondere seitlich in eine Richtung parallel zu der Lauffläche in den Rücksprung einschiebbar. Die Breite des Ziehelementes kann bei dieser Ausgestaltung in einem Bereich von etwa 0,3 bis 2 cm liegen. Eine Breite des ausgesparten Raumes kann bei dieser Ausgestaltung in einem Bereich von etwa 0,8 cm bis 2,5 cm liegen. Die Tiefe des ausgesparten Raumes kann bei dieser Ausgestaltung zumindest 5 cm betragen. Prinzipiell könnte der ausgesparte Raum bei dieser Ausgestaltung nach unten offen sein. Jedoch könnte eine Gefahr eines Abrutschens des Ziehelementes beim Ziehen des Behälters reduziert werden, wenn der ausgesparte Raum in vertikaler Richtung einen Abstand von beispielsweise 2 cm zu der Lauffläche aufweist.

Der Vorteil des schwenkbaren Ziehelementes könnte insbesondere darin bestehen, dass das Ziehelement nach dem Einschwenken in einer Lage, in welcher eine Längsachse des Ziehelementes einen Winkel von etwa 45 Grad zu der Lauffläche einnimmt, positionierbar ist. In diesem Fall kann die Gefahr des Abrutschens des Ziehelementes beim Ziehen des Behälters besonders gut reduziert werden.

Prinzipiell ist es auch möglich, den ausgesparten Raum nach unten hin abzugrenzen. Dies könnte den Vorteil haben, dass unterhalb des Rücksprunges eine Stoßlippe oder Stabilisierungsrippe vorgesehen werden kann. Der ausgesparte Raum kann beispielsweise durch die Stoßlippe oder eine Rippe, die von der Seitenwand in horizontaler Richtung verläuft, nach unten hin begrenzt sein. Für den Fall, dass der ausgesparte Raum nach unten hin begrenzt ist, ist eine Lage des ausgesparten Raumes insbesondere an der unteren Ecke der Seitenwand aus oben genannten Gründen vorteilhaft. Die Lage des ausgesparten Raumes an der unteren Ecke der Seitenwand kann insbesondere dadurch realisiert sein, dass ein Mittelpunkt des ausgesparten Raumes sich in einem Bereich von etwa 2 bis 7 cm in vertikaler Richtung oberhalb der Lauffläche befindet und einen Abstand in der Seitenwandnormalenrichtung von der Kontaktebene von etwa 1 bis 5 cm aufweist.

Bevorzugte Ausführungsbeispiele des vorgeschlagenen Behälters werden anhand der folgenden Figuren näher erläutert. Dabei zeigt schematisch:
- Figur 1: einen Behälter den zum Transportieren von Gegenständen mit einem Rücksprung in einer Seitenwand des Behälters;
- Figur 2: den in Figur 1 gezeigten Rücksprung in einer vergrößerten Ansicht;
- Figur 3: einen Zustand des in Figur 1 gezeigten Behälters, in welchem der Behälter mit der in Figur 1 gezeigten Seitenwand an einem weiteren Behälter anliegt;
- Figur 4: den in Figur 1 gezeigten Rücksprung in einer vergrößerten Ansicht und einen Ziehfinger einer Rückholvorrichtung zum Ziehen des in Figur 1 gezeigten Behälters;
- Figur 5: einen Regalshuttle mit einem Ziehfinger zum Ziehen des in Figur 1 gezeigten Behälters;

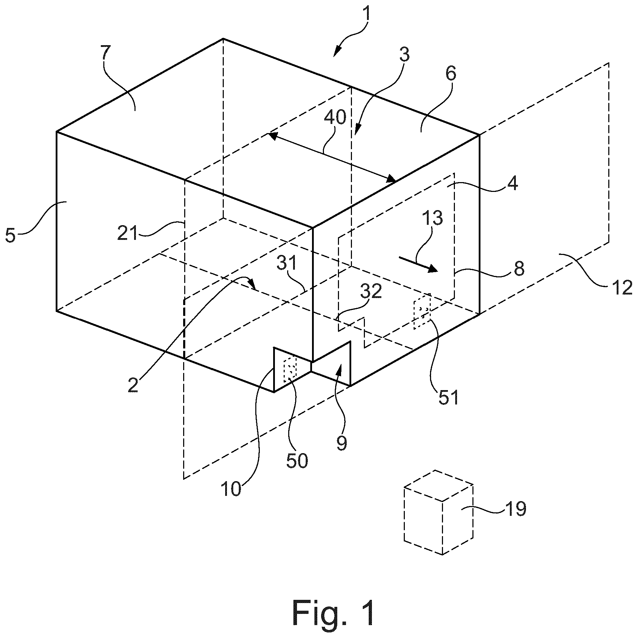

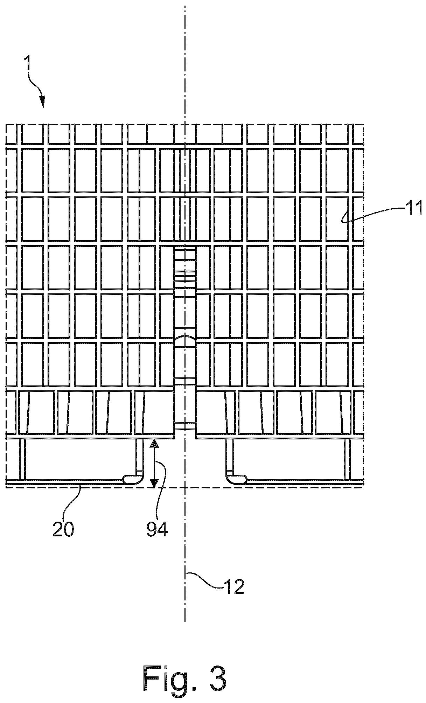

Fig. 1 zeigt einen Behälter 1 zum Lagern und Transportieren von Gegenständen. Der Behälter 1 weist einen Boden 2, der einen Laderaum 3 des Behälters 2 nach unten hin begrenzt, und von dem Boden 2 aus sich nach oben erstreckende Seitenwände 4, 5, 6, 7 auf. Zumindest eine der Seitenwände, beispielsweise die Seitenwand 4, weist einen senkrecht zum Boden 2 verlaufenden Kontaktbereich 8 zum Positionieren des Behälters 1 hinter einem weiteren Behälter 11, der in Fig. 3 teilweise gezeigt ist, auf. Der Kontaktbereich 8 ist bei der in Fig. 1 dargestellten Ausführungsform des Behälters 1 flächig dargestellt. Der Kontaktbereich 8 verläuft innerhalb einer Kontaktebene 12,. Die Kontaktebene 12 begrenzt den Behälter 1 nach außen hin in einer Normalenrichtung 13 der Seitenwand 4. Daraus ergibt sich, dass der Behälter 1 zuerst mit dem Kontaktbereich 8 den weiteren Behälter 11 berührt, wenn der Behälter 1 auf den weiteren Behälter 11 aufgeschoben wird.

Fig. 1 zeigt weiterhin eine erste Mittellinie 31 des Behälters 1, die parallel zu der Kontaktebene 12 verläuft, und eine zweite Mittellinie 32, die senkrecht zu der Kontaktebene 12 verläuft. Die beiden Mittellinien 31, 32 sind in Fig. 1 in Form von Mittellinien des Bodens 2 dargestellt. Zur einfachen geometrischen Beschreibung des Behälters 1 ist weiterhin eine erste Mittelebene 21 in Fig. 1 eingezeichnet, die senkrecht zu dem Boden 2 verläuft und die erste Mittellinie 31 aufweist. Der Kontaktbereich 8, und insbesondere die Kontaktebene 12, weist einen Abstand 40 zu der ersten Mittelebene in der Normalenrichtung 13 auf. Der Abstand 40 gibt damit einen Abstand der ersten Mittelebene 21 zu dem weiteren Behälter 11 vor, wenn der Behälter 1 den weiteren Behälter 11 berührt.

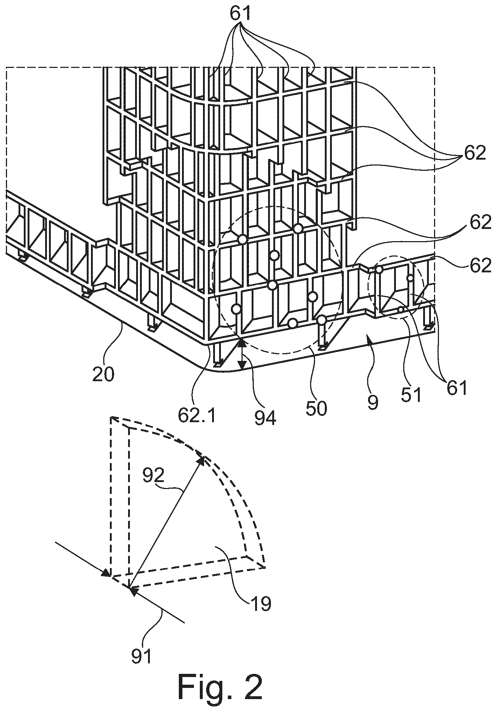

Fig. 1 zeigt weiterhin, dass die Seitenwand 4 einen Rücksprung 9 gegenüber dem Kontaktbereich 8 an zumindest einer Seite der Seitenwand 4 aufweist. Der Rücksprung 9 erstreckt sich zumindest horizontal von einer Außenkante 10 der Seitenwand 4 durchgängig bis zu dem Kontaktbereich 8. Ein Bereich der Seitenwand 4, innerhalb welchem sich der Rücksprung 9 erstreckt, wird im Folgenden, analog zu oben, als Rücksprungbereich bezeichnet. Die Außenkante 10 ist bei der in Fig. 1 dargestellten Variante des Behälters 1 parallel in einer Richtung senkrecht zu der Kontaktebene 12 in Bezug zu der Kontaktebene 12 versetzt angeordnet. Zur Veranschaulichung sind in Fig. 1 äußere Teile 50, z.B. Stirnkanten von Versteifungsrippen der Seitenwand 4, die zwischen dem Kontaktbereich 8 und der Außenkante 10 angeordnet sind, eingezeichnet. Die äußeren Teile 50 haben jeweils einen geringeren Abstand zu der ersten Mittelebene 21 als weitere Teile 51 (ebenfalls z.B. gebildet durch Stirnkanten von Versteifungsrippen) der Seitenwand 4, die sich in dem Kontaktbereich 8 befinden. Die weiteren äußeren Teile 51 weisen den Abstand 40 zu der ersten Mittelebene 21 auf. Bei der in Fig. 1 dargestellten Ausgestaltung des Behälters 1 sind die äußeren Teile 50 auf einer ebenen Fläche angeordnet, die sich zwischen dem Kontaktbereich 8 und der Außenkante 10 erstreckt. Die in Fig. 1 dargestellte Ausführungsform des Behälters 1 soll jedoch als vereinfachte und abstrakte Darstellung, insbesondere als abstrakte Darstellung des Rücksprungs 9, verstanden werden. Die abstrakte Darstellung des Rücksprunges 9 mit Hilfe der äußeren Teile 50 und der weiteren äußeren Teile 51 soll auch zur Beschreibung einer weiteren in Fig. 2 gezeigten Variante des Rücksprunges 9 des vorgeschlagenen Behälters 1 verwendet werden.

Bei der in Fig. 2 dargestellten Variante des Rücksprunges 9 liegen die äußeren Teile 50 auf Außenkanten (Stirnkanten) von senkrecht zu dem Boden 2 verlaufenden Rippen 61 und parallel zu dem Boden 2 verlaufenden weiteren Rippen 62 der Seitenwand 4. Analog sind in Fig. 2 die weiteren äußeren Teile 51 dargestellt, die auf Außenkanten von einem Teil der parallelen Rippen 62 und der senkrechten Rippen 61 liegen.

Weiterhin zeigt Fig. 1 einen ausgesparten Raum 19 der Seitenwand 4, der sich aufgrund des Rücksprunges 9 ergibt. Eine Form des ausgesparten Raumes 19 ist in Fig. 1 abstrakt als Quader eingezeichnet.

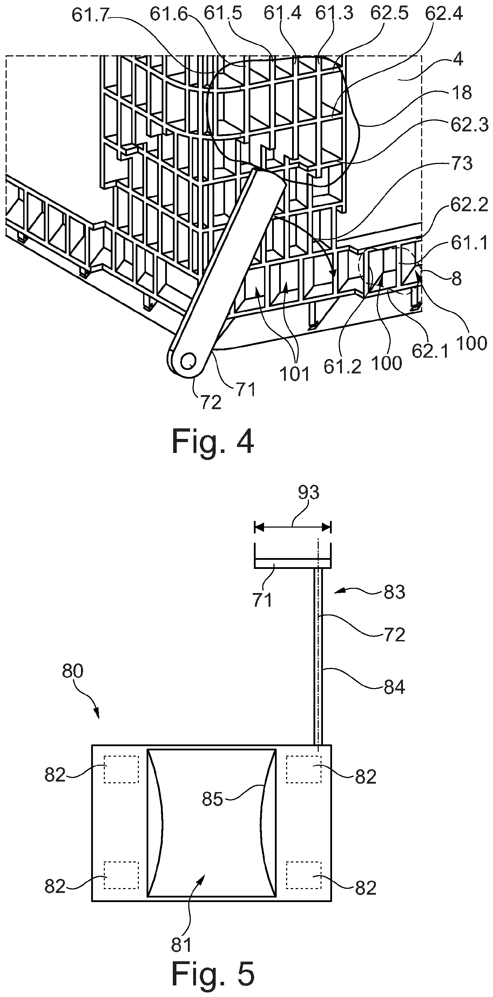

Bei der in Fig. 2 gezeigten Variante des Rücksprunges 9 sind innerhalb des Rücksprungbereiches die senkrechten Rippen 61 in der Normalenrichtung 13 und die parallelen Rippen 62 in einer Richtung parallel zur ersten Mittellinie 31 derart gekürzt, dass der ausgesparte Raume 19 in einer Ebene, die parallel zu der Seitenwand 4 verläuft, einen Querschnitt aufweist, der einem Kreissektor ähnelt. Mit anderen Worten ist der Rücksprung 9 bei der in Fig. 2 dargestellten Ausführungsform des Behälters 1 derart ausgebildet, dass der ausgesparte Raum 19 eine Form eines Scheibensegmentes annimmt. Dies hat den Vorteil, dass der ausgesparte Raum 19 nach der in Fig. 2 dargestellten Variante gerade ausreichend Raum bietet, um ein Ziehelement, exemplarisch einen Ziehfinger 71 durch Drehung um eine parallel zur zweiten Mittellinie 32 angeordnete Drehachse 72 einer in Fig. 5 gezeigten Rückholvorrichtung 83 in den Rücksprungbereich einzubringen.

Fig. 5 zeigt ein Regalshuttle mit einer Transportfläche 81 zum Transportieren des Behälters 1, Rädern 82 und der Rückholvorrichtung 83. Die Rückholvorrichtung 83 weist eine ausfahrbare Welle 84 auf, die um die Drehachse 72 drehbar ist. An der Welle 84 ist der Ziehfinger 71 befestigt. Eine in Fig. 5 nicht dargestellte Steuereinheit und ein erster Motor des Regalshuttles 80 sind bevorzugt derart aufeinander abgestimmt, dass der Ziehfinger 71 in einer ersten Stellung, in welcher der Ziehfinger 71 senkrecht zum Boden 2 ausgerichtet ist, angetrieben von dem ersten Motor von einem Rumpf des Regalshuttles 80 aus gesehen, in die Normalenrichtung 13 zu einer zweiten Position, die sich ungefähr in der Kontaktebene 12 befindet, bewegbar ist.

Weiterhin ist ein zweiter Motor des Regalshuttles 80 und das Steuergerät zusammen derart ausgebildet, dass der Ziehfinger 71, wenn dieser sich in der zweiten Position befindet, mithilfe des zweiten Motors in eine in Fig. 4 gezeigte Drehrichtung 73 bewegbar, z.B. drehbar ist. Vorteilhafterweise wird der Ziehfinger 71 hierbei etwa 45-90 Grad in die Drehrichtung 73 gedreht, sodass der Ziehfinger 71 sich etwa in der Mitte des ausgesparten Raumes 19 befindet. Im Anschluss daran wird der erste Motor des Regalshuttles 80 bevorzugt derart betätigt, dass der Behälter 1 mit Hilfe einer mit Hilfe des ersten Motors an dem Ziehelement 71 aufgebrachten Zugkraft auf die Transportfläche 81 gezogen wird. Hierbei bewegt sich der Behälter entgegengesetzt zu der in Fig. 1 gezeigten Normalenrichtung 13 von der zweiten Position zurück zu der ersten Position.

Gemäß der in Fig. 2 gezeigten Variante des Rücksprunges 9 kann der ausgesparte Raum 19 eine Tiefe 91 von beispielsweise 5-15 Millimetern aufweisen. Ein Radius 92 des in Fig. 2 gezeigten Scheibensegmentes zur Darstellung des ausgesparten Raumes 19 kann gemäß einer vorteilhaften Ausgestaltung etwa 50-90 Millimeter betragen. Die Außenkante 10 ist hierbei entsprechend 50-90 Millimeter in horizontaler Richtung entfernt von dem Kontaktbereich 8 in horizontaler Richtung angeordnet. Eine Länge 93 des Ziehfingers 71 kann bei dieser Variante in einer Größenordnung von etwa 70-110 Millimetern liegen, je nachdem, wie Breit das Regalshuttle ist.

Es versteht sich von selbst, dass der Rücksprung 9 eine Tiefe aufweist, die der Tiefe 91 des ausgesparten Raumes 19 entspricht. Damit geht einher, dass die senkrechten Rippen 61 und die horizontalen Rippen 62 innerhalb des Rücksprungbereiches um die Tiefe 91 des ausgesparten Raumes 19 in der Normalenrichtung 13 verkürzt sind.

Fig. 2 und Fig. 4 zeigen weiterhin eine Variante des Behälters 1, bei welcher eine unterste horizontale Rippe 62.1 der horizontalen Rippen 62 einen vertikalen Abstand 94 zu einer Bodenplatte 20 des Behälters 1, die den Boden 2 ausbildet, aufweist. Der vertikale Abstand 94 liegt vorteilhaft in einer Größenordnung von etwa 0,5 bis 2 Zentimetern und ist bevorzugt gleich 1 Zentimeter. Der vertikale Abstand 94 ist ebenfalls in Fig. 3 eingezeichnet.

Fig. 2 bis 4 zeigen jeweils Varianten des Behälters 1, bei welchen der Kontaktbereich 8, bezogen auf eine Höhe des Behälters 1, im unteren Viertel des Behälters 1 angeordnet ist. Weiterhin zeigen die in Fig. 1 bis 4 gezeigten Varianten des Behälters Beispiele, bei welchen der Rücksprung 9 an einer unteren Ecke der Seitenwand 4 vorgesehen ist.

Bei der in Fig. 2 gezeigten Variante des Behälters 1 bilden die unterste Rippe 62.1 und eine darüberliegende horizontale Rippe 62.2 zusammen den Kontaktbereich 8 zum Positionieren des Behälters 1 hinter dem weiteren Behälter 11. Die darüberliegenden weiteren horizontalen Rippen 62.3, 62.4 und 62.5 der horizontalen Rippen 62 bilden mit den senkrechten Rippen 61.3, 61.4, 61.5, 61.6 und 61.7 der senkrechten Rippen 61 einen weiteren Kontaktbereich 18 aus, der senkrecht zum Boden 2 verläuft und, vom Boden 2 aus gesehen, oberhalb des Kontaktbereiches 8 angeordnet ist.

Der Kontaktbereich 8 bei der in Fig. 2, Fig. 3 und Fig. 4 gezeigten Variante des Behälters 1 ist durch Stirnkanten der untersten parallelen Rippe 62.1, der darüberliegenden parallelen Rippe 62.2 und einer ersten senkrechten Rippe 61.1 und einer zweiten senkrechten Rippe 61.2 der senkrechten Rippen 61 gebildet. Die in Fig. 2 dargestellten äußeren Teile 51 stellen beispielhaft Teile der äußeren Kanten der Rippen 62.1, 62.2, 61.1 und 61.2 dar. Die äußeren Kanten der untersten parallelen Rippe 62.1 und der darüberliegenden parallelen Rippe 62.2 bilden jeweils eine Führungskante zum Führen des Behälters 1 auf der Transportfläche 81 des in Fig. 5 gezeigten Regalshuttles 80.

Die Außenkanten der untersten parallelen Rippe 62.1 und der darüberliegenden parallelen Rippe 62.2 gleiten bevorzugt an einer ersten seitlichen Führung 85 des Regalshuttles 80 entlang, wenn der Behälter 1 mit Hilfe des Ziehfingers 71 auf die Transportfläche 81 gezogen wird.

Die Fig. 1 bis 4 zeigen Varianten des Behälters 1, bei welcher der Rücksprung 9 an einer unteren Ecke der Seitenwand 4 angeordnet ist. Weiterhin zeigen die Fig. 1 bis 4 auch Varianten des Behälters 1, bei welchen an zumindest zwei Seitenwänden, nämlich der Seitenwand 4 und der Seitenwand 5, jeweils ein Rücksprung an der unteren Ecke des Behälters 1 angeordnet ist. Der Rücksprung der Seitenwand 5 ist vorteilhafterweise spiegelbildlich zu dem Rücksprung 9 ausgestaltet. Zur Darstellung des Rücksprunges der Seitenwand 5 können äußere Punkte der Seitenwand 4, insbesondere die äußeren Teile 50 und die weiteren äußeren Teile 51, an einer Spiegelebene gespiegelt werden, die senkrecht zum Boden 2 verläuft und in einem Winkel von 45 Grad zur Kontaktebene 12 aufweist.

Es versteht sich von selbst, dass jede Ecke des Behälters 1 analog zu der Ecke, wie sie in Fig. 2 und Fig. 4 dargestellt ist, ausgebildet sein kann. Bei dieser Variante weisen entsprechend alle Seitenwände 4, 5, 6, 7 des Behälters 1 jeweils einen Kontaktbereich und einen jeweiligen Rücksprung auf. Dadurch ist es unerheblich, ob der Behälter 1, wie in Fig. 1 gezeigt, mit der Kontaktebene 12 senkrecht zur Drehachse 72 der Rückholvorrichtung 83 ausgerichtet ist oder um 90, 180 oder 270 Grad versetzt zu dieser Position angeordnet ist. In allen Fällen kann der Behälter 1 mit Hilfe des Ziehfingers 71 durch Hintergreifen des Rücksprunges einer ausgewählten Seitenwand der Seitenwände 4, 5, 6, 7 auf die Transportfläche 81 gezogen werden.

Fig. 4 zeigt weiterhin eine Ausgestaltung des Behälters 1, bei welcher die Seitenwand 4 innerhalb des Kontaktbereiches 8 optional seitliche Wasserabläufe 100 zum Ablaufen von Flüssigkeiten aus dem Behälter 1 aufweist. Innerhalb des Rücksprungbereiches, der sich zwischen dem Kontaktbereich 8 und der Außenkante 10 in horizontaler Richtung erstreckt, sind vorteilhafterweise keine Wasserabläufe vorgesehen. Stattdessen weist die Seitenwand 4 zwischen den senkrechten Rippen 61 und den parallelen Rippen 62 innerhalb des Rücksprungbereiches vorteilhafterweise Seitenwandelemente 101, die senkrecht zum Boden 2 verlaufen, auf. Dadurch kann die untere Ecke des Behälters 1 verstärkt werden, um einer potentiellen Schwächung der Ecke durch die verkürzten senkrechten Rippen 61 und die parallelen Rippen 62 in dem Rücksprungbereich entgegenzuwirken. Diese Seitenwandelemente 101 können als Versteifungselemente angesehen werden.

Weiterhin zeigen Fig. 2 und Fig. 4 eine Ausgestaltung des Behälters 1, bei welcher der Rücksprung 9 in einer Ebene parallel zur Seitenwand 4 einen runden Verlauf aufweist. Aufgrund dieses runden Verlaufes ergibt sich ein gegenstückiger Verlauf der Kanten 62.

Der Behälter 1 zusammen mit dem in Fig. 5 gezeigten Regalshuttle 80 können zusammengenommen als ein Lagersystem betrachtet werden. Der Ziehfinger 71 ist, wie oben beschrieben, beweglich zu dem Rumpf des Regalshuttles 80 und derart relativ zu dem Behälter 1 positionierbar, dass der Ziehfinger 71 zum Ziehen des Behälters 1 mit Hilfe des Ziehfingers 71 in den Rücksprung 9, insbesondere in den ausgesparten Raum 19 des Behälters 1, einbringbar ist. Die Räder 82 können als Fahrwerk des Regalshuttles 80 betrachtet werden. Mit Hilfe des Fahrwerks ist das Regalshuttle 80 innerhalb eines Lagers beweglich. Das Lager, das in den Figuren der Übersicht halber nicht dargestellt ist, weist vorteilhafterweise mehrere Etagen auf, auf denen das Regalshuttle 80 auf Bahnen entlanggefahren werden kann.

## Patentansprüche

1. Behälter zum Lagern und Transportieren von Gegenständen, wobei der Behälter einen Boden, der einen Laderaum des Behälters nach unten hin begrenzt, und von dem Boden aus sich nach oben erstreckende Seitenwände aufweist, wobei zumindest eine Seitenwand einen senkrecht zum Boden verlaufenden Kontaktbereich zum Positionieren des Behälters hinter einem weiteren Behälter und einen Rücksprung gegenüber dem Kontaktbereich an zumindest einer Seite der Seitenwand aufweist, wobei sich der Rücksprung zumindest horizontal von einer Außenkante der Seitenwand durchgängig bis zum Kontaktbereich erstreckt.

2. Behälter nach Anspruch 1, wobei sich der Kontaktbereich bezogen auf die Höhe des Behälters zumindest im unteren Drittel, bevorzugt zumindest im unteren Viertel und besonders bevorzugt zumindest im unteren Fünftel des Behälters erstreckt.

3. Behälter nach Anspruch 1 oder 2, wobei der Rücksprung flächig ausgebildet ist, wobei eine vertikale Höhe des Rücksprungs zumindest einem Drittel, vorzugsweise zumindest einer Hälfte, einer horizontalen Breite des Rücksprungs entspricht.

4. Behälter nach einem der vorhergehenden Ansprüche, wobei sich der Kontaktbereich nach unten hin mit einem Abstand von etwa einem Zentimeter bis zum Boden erstreckt.

5. Behälter nach einem der vorhergehenden Ansprüche, wobei der Rücksprung an einer unteren Ecke der Seitenwand vorgesehen ist.

6. Behälter nach einem der vorhergehenden Ansprüche, wobei in dem Bereich des Rücksprunges die Seitenwand wasserundurchlässig ist und neben dem Rücksprung die Seitenwand zumindest einen Wasserablaufkanal aufweist.

7. Behälter nach einem der vorhergehenden Ansprüche, wobei der Rücksprung in einer Ebene, die parallel zu der Seitenwand verläuft, einen Querschnitt in Form eines Kreissektors aufweist.

8. Behälter nach einem der vorhergehenden Ansprüche, wobei an der Seitenwand eine Führungskante zum Führen des Behälters auf einer Transportebene eines Transportsystems zum Transportieren des Behälters angeordnet ist, wobei der Kontaktbereich zumindest teilweise durch die Führungskante gebildet ist.

9. Behälter nach einem der vorhergehenden Ansprüche, wobei mehrere der Seitenwände, insbesondere alle Seitenwände einen jeweiligen Kontaktbereich und einen jeweiligen Rücksprung aufweisen.

10. Behälter nach einem der vorhergehenden Ansprüche, wobei der Rücksprung durch einen ausgesparten Raum gebildet ist und der ausgesparte Raum nach unten hin offen ist.

11. Behälter nach Anspruch 10, wobei der ausgesparte Raum an der Außenkante der Seitenwand eine Höhe, die in vertikaler Richtung von einer Lauffläche des Behälters aus messbar ist, von mindestens 5 cm aufweist.

12. Behälter nach Anspruch 10, wobei der ausgesparte Raum an der Außenkante der Seitenwand eine Höhe, die in vertikaler Richtung von einer Lauffläche des Behälters aus messbar ist, von mindestens 2,5 cm aufweist.

13. Lagersystem mit einem Behälter nach einem der vorhergehenden Ansprüche und einer Rückholvorrichtung, insbesondere einem Regalshuttle, zum Ziehen des Behälters, wobei die Rückholvorrichtung, insbesondere das Regalshuttle, einen Rumpf und ein Ziehelement aufweist, der beweglich zu dem Rumpf ist und der Rumpf derart zu dem Behälter positionierbar ist, dass das Ziehelement zum Ziehen des Behälters mithilfe des Ziehelements in den Rücksprung des Behälters einbringbar ist.

14. Lagersystem nach Anspruch 13, wobei die Beweglichkeit des Ziehelements eine Schwenkbewegung umfasst und das Ziehelement zur Durchführung der Schwenkbewegung schwenkbar um eine Achse gelagert ist, wobei sich die Achse senkrecht zu der den Rücksprung aufweisenden Seitenwand erstreckt.

15. Lagersystem nach Anspruch 13 oder 14, wobei die Rückholvorrichtung ein Fahrwerk aufweist und die Rückholvorrichtung mithilfe des Fahrwerks innerhalb eines Lagers beweglich ist.
